# EUROPÄISCHE PATENTSCHRIFT

(11) **EP 3 874 913 B1**
(45) Veröffentlichungstag und Bekanntmachung des Hinweises auf die Patenterteilung: **15.01.2025**
(21) Anmeldenummer: 19795205.4
(22) Anmeldetag: 28.10.2019
(51) Int. Cl.: H05B 47/155, H05B 47/16, F41H 13/00

(54) **VERFAHREN ZUM BETREIBEN EINES ELEKTRONISCHEN BLENDKÖRPERS UND ELEKTRONISCHER BLENDKÖRPER**
METHOD FOR OPERATING AN ELECTRONIC DAZZLING ELEMENT, AND ELECTRONIC DAZZLING ELEMENT
PROCÉDÉ POUR FAIRE FONCTIONNER UN CORPS D'ÉBLOUISSEMENT ÉLECTRONIQUE ET CORPS D'ÉBLOUISSEMENT ÉLECTRONIQUE

(30) Priorität: 02.11.2018 DE 102018008662
(43) Veröffentlichungstag der Anmeldung: 08.09.2021
(73) Patentinhaber: Diehl Stiftung & Co. KG, 90478 Nürnberg (DE)
(72) Erfinder: HÖLZL, Johannes, 91054 Erlangen (DE); CABANSKI, Wolfgang, 74076 Heilbronn (DE); KLETTKE, Oliver, 90482 Nürnberg (DE); STARK, Robert, 91438 Bad Windsheim (DE); GLASMACHER, Mathias, 68799 Reilingen (DE)
(74) Vertreter: Diehl Patentabteilung
(86) Internationale Anmeldenummer: PCT/EP2019/079438
(87) Internationale Veröffentlichungsnummer: WO 2020/089185

(56) Entgegenhaltungen:
- EP-A1- 3 023 731
- DE-U1- 202008 006 658
- US-A1- 2005 243 224
- US-A1- 2018 216 919

## Beschreibung

Die vorliegende Erfindung betrifft ein Verfahren zum Betreiben eines elektronischen Blendkörpers zum Aussenden von Lichtpulsen sowie einen elektronischen Blendkörper zum Aussenden von Lichtpulsen.

Zur Irritation von Personen und Sensorsystemen werden sogenannte Blendgranaten eingesetzt, die durch das Aussenden von Lichtpulsen hoher Intensität zu einer kurzzeitigen Blendung und Irritation führen sollen. Neben pyrotechnischen Blendgranaten, bei denen die Lichtpulse mittels einer Explosionsreaktion erzeugt werden, sind inzwischen auch elektronische Blendgranaten bekannt, bei denen die Lichtpulse durch elektronische Emitter erzeugt werden, die durch eine Steuereinrichtung ansteuerbare Leuchtmittel wie LEDs oder Laserdioden enthalten. Derartige elektronische Blendkörper sind zum Beispiel in der EP 3 023 730 A1 und der EP 3 023 731 A1 sowie der DE 20 2008 006 658 U1 offenbart. Weitere Systeme zum Blenden von Zielpersonen sind zum Beispiel in US 2018/0216919 A1 und US 2005/0243224 A1 beschrieben.

Es ist die Aufgabe der Erfindung, ein verbessertes System zum Erzielen einer effektiven Irritationswirkung mit einem elektronischen Blendkörper zu schaffen.

Diese Aufgabe wird gelöst durch die Lehre des unabhängigen Anspruchs 1, dessen Oberbegriff auf der oben zitierten US 2005/0243224 A1 basiert. Besonders vorteilhafte Ausgestaltungen und Weiterbildungen der Erfindung sind Gegenstand der abhängigen Ansprüche. Die vorliegende Erfindung betrifft insbesondere ein Verfahren zum Betreiben eines elektronischen Blendkörpers gemäß Anspruch 1 und einen elektronischen Blendkörper gemäß Anspruch 12.

In dem erfindungsgemäßen Verfahren zum Betreiben eines elektronischen Blendkörpers zum Aussenden von Lichtpulsen zur Irritation von Personen und Sensorsystemen, der wenigstens einen optischen Emitter mit wenigstens einem elektronischen Leuchtmittel zum Aussenden von Lichtpulsen aufweist, wird das Leuchtmittel des optischen Emitters derart angesteuert, dass eine von dem Leuchtmittel ausgesendete Lichtpulssequenz an die Physiologie des menschlichen Auges und damit an die Eigenschaften des menschlichen Sehprozesses angepasst ist.

Während bei elektronischen Blendkörpern bisher in erster Linie darauf abgezielt worden ist, dauerhafte Folgen von Lichtpulsen mit hohen Lichtstärken auszusenden, um eine möglichst starke Blendwirkung bei einer Zielperson zu erreichen, ohne Augenschäden zu verursachen, wird gemäß der Erfindung vorgeschlagen, die ausgesendete Lichtpulssequenz an die Physiologie des menschlichen Auges anzupassen und auf diese Weise eine effektivere Blend- und Irritationswirkung bei Zielpersonen zu erreichen. Die möglichst starke Blend- und Irritationswirkung kann so auch mit einem geringeren elektrischen Energieaufwand erreicht werden. Hierdurch können auch Baugröße, Gewicht und thermisches Management des Blendkörpers verbessert werden.

Die Anpassung der vom Leuchtmittel des optischen Emitters des Blendkörpers ausgesendeten Lichtpulssequenz an die Physiologie des menschlichen Auges und damit an die Eigenschaften des menschlichen Sehprozesses wird erfindungsgemäß durch die nachfolgend angegebenen Ansteuerungen (i) und (ii) erzielt.

In der Ansteuerung (i) enthält die Lichtpulssequenz eine Irritationssequenz, in der abwechselnd nacheinander mehrere Blendpulsfolgen mit mehreren Blendpulsen zum Erzielen einer Irritationswirkung bei einer Zielperson und mehrere Blendpausen ohne solche Blendpulse ausgesendet werden, wobei eine Periodendauer einer Abfolge aus einer Blendpulsfolge und einer anschließenden Blendpause maximal 250 ms beträgt. Vorzugsweise werden in einer Blendpulsfolge zwei oder drei Blendpulse ausgesendet. Vorzugsweise beträgt eine Dauer einer Blendpulsfolge maximal etwa 200 ms und beträgt eine Dauer einer Blendpause mindestens etwa 50 ms. In einer bevorzugten Ausführungsform beträgt die Periodendauer einer Blendpulsfolge und einer Blendpause etwa 200 ms. Diese Ansteuerung (i) berücksichtigt den Lidschlussreflex des menschlichen Auges, der nach spätestens 250 ms abgeschlossen ist.

In der weiteren Ansteuerung (ii) enthält die Lichtpulssequenz eine Irritationssequenz, in der mehrere Blendpulse zum Erzielen einer Irritationswirkung bei einer Zielperson ausgesendet werden, und zudem eine der Irritationssequenz vorgeschaltete Vorsequenz, in der ein von einer Zielperson wahrnehmbares Reizlicht ohne Irritationswirkung bei der Zielperson ausgesendet wird. Das Reizlicht hat eine Leuchtdichte von maximal etwa 1×10³ cd/m², beispielsweise von etwa 200 oder 500 cd/m². Das Reizlicht kann dauerhaft oder pulsartig ausgesendet werden. Bei dieser Ansteuerung (ii) soll mit dem der Irritationssequenz vorgeschalteten Reizlicht bewirkt werden, dass die Zielperson ihren Blick unbewusst auf den Blendkörper richtet, sodass die anschließenden Blendpulse in der Irritationssequenz eine größere Blendwirkung bei der Zielperson erzielen können.

In einer Ausgestaltung der Erfindung enthält die Lichtpulssequenz eine Irritationssequenz, in der mehrere Blendpulse zum Erzielen einer Irritationswirkung bei einer Zielperson ausgesendet werden, wobei die Blendpulse jeweils eine Leuchtdichte von maximal 1,6×10⁶ cd/m² haben. Vorzugsweise haben die Blendpulse jeweils eine Leuchtdichte von mindestens etwa 1×10⁴ cd/m², bevorzugter von mindestens etwa 1×10⁵ cd/m². In einer bevorzugten Ausführungsform haben die Blendpulse jeweils eine Leuchtdichte von etwa 1,0×10⁶ cd/m². Vorzugsweise werden in einer Blendpulsfolge zwei oder drei Blendpulse ausgesendet. Diese Ausgestaltung der Erfindung berücksichtigt, dass das menschliche Auge ab einer Leuchtdichte von etwa 1,6×10⁶ cd/m² nicht mehr adaptieren kann, d.h. die Zapfen gesättigt sind und keine Botenstoffänderung mehr an den Bipolarzellen erzeugt wird.

In einer Ausgestaltung der Erfindung enthält die Lichtpulssequenz eine Irritationssequenz, in der mehrere Blendpulse zum Erzielen einer Irritationswirkung bei einer Zielperson ausgesendet werden, wobei die Blendpulse jeweils eine Pulssteigung im Bereich von 0,5×10⁵ cd/m²·ms bis 2,0×10⁵ cd/m²·ms haben. Vorzugsweise werden in einer Blendpulsfolge zwei oder drei Blendpulse ausgesendet. Bei dieser Ausgestaltung der Erfindung ist die Steilheit der Blendpulse an die Charakteristik des menschlichen Auges angepasst, um eine möglichst optimierte Blend- und Irritationswirkung zu erzielen.

In einer Ausgestaltung der Erfindung enthält die Lichtpulssequenz eine Irritationssequenz, in der mehrere Blendpulse zum Erzielen einer Irritationswirkung bei einer Zielperson ausgesendet werden, wobei die Blendpulse jeweils eine Pulsweite im Bereich von 20 ms bis 50 ms haben. Vorzugsweise haben die Blendpulse jeweils eine Pulsweite von mindestens etwa 30 ms und/oder von höchstens etwa 40 ms. Vorzugsweise werden in einer Blendpulsfolge zwei oder drei Blendpulse ausgesendet. Bei dieser Ausgestaltung der Erfindung ist die Pulsweite der Blendpulse an die Charakteristik des menschlichen Auges angepasst, um eine möglichst optimierte Blend- und Irritationswirkung zu erzielen.

In einer Ausgestaltung der Erfindung wird in den Blendpausen der Irritationssequenz jeweils wenigstens ein Reizpuls mit einer Leuchtdichte (L) von maximal 1×10⁴ cd/m² ausgesendet. Vorzugsweise werden in einer Blendpause ein oder zwei Reizpulse ausgesendet. Bei dieser Ausgestaltung der Erfindung soll mit den Reizpulsen in den Blendpausen der Irritationssequenzen jeweils bewirkt werden, dass die Zielperson ihren Blick unbewusst (erstmals oder erneut) auf den Blendkörper richtet, sodass die Blendpulse in der anschließenden Irritationssequenz eine größere Blendwirkung bei der Zielperson erzielen können.

In einer weiteren Ausgestaltung der Erfindung enthält die Lichtpulssequenz eine Irritationssequenz, in der mehrere Blendpulse zum Erzielen einer Irritationswirkung bei einer Zielperson ausgesendet werden, wobei die Blendpulse derartige Pulsweiten und Lichtstärken haben, dass sie in einem definierten Abstand vom Blendkörper eine Bestrahlungsstärke unterhalb einer maximal zulässigen Bestrahlung einer Zielperson erzeugen. Vorzugsweise soll die erzeugte Bestrahlungsstärke in einem festen Verhältnis von maximal 100% zu einem die maximal zulässige Bestrahlung angebenden Referenzwert stehen. Die maximal zulässige Bestrahlung (bzw. der Referenzwert) kann beispielsweise durch einen MZB-Wert nach der Norm DIN EN 60825-1 gegeben sein. Die maximal zulässige Bestrahlung ist dabei in der Regel abhängig von der Wellenlänge der ausgesendeten Blendpulse. Mit dieser Ausgestaltung der Erfindung kann eine starke Blendung einer Zielperson bewirkt werden, ohne gesundheitliche Schäden zu verursachen, wobei als Grenzwert für die Bestrahlungsstärke ein auf die physiologische Wirkung bezogener Referenzwert benutzt wird.

In einer Ausführungsvariante dieser Ausgestaltung werden Abstände zwischen dem Blendkörper und wenigstens einer Zielperson erfasst und wird der definierte Abstand in Abhängigkeit von den erfassten Abständen bestimmt. Falls mehrere Zielpersonen erfasst werden, so wird vorzugsweise der kleinste der erfassten Abstände für die Bestimmung des definierten Abstandes benutzt. In die Bestimmung des definierten Abstandes aus den erfassten Zielperson-Abstände geht zum Beispiel eine typische Körpergröße von Zielpersonen ein, um die Positionshöhe der Augen über der Ebene des Blendkörpers zu berücksichtigen. Die Abstandserfassung erfolgt vorzugsweise mit einem Abstandssensor im / am Blendkörper.

Im Fall des Einsatzes mehrerer Blendkörper wird bei dieser Ausführungsvariante die von dem Leuchtmittel ausgesendete Lichtpulssequenz vorzugsweise an die von den anderen Blendkörpern erfassten Abstände zu Zielpersonen angepasst.

In einer anderen Ausführungsvariante der obigen Ausgestaltung ist der definierte Abstand ein zu erwartender minimaler Abstand zwischen dem Blendkörper und den Augen einer Zielperson von beispielsweise etwa 2 m.

In einer weiteren Ausgestaltung der Erfindung werden die Lichtpulse des optischen Emitters als kollimierte Lichtstrahlen ausgesendet werden. Durch die Kollimation der Lichtstrahlen kann die Blendwirkung weiter erhöht werden.

In einer noch weiteren Ausgestaltung der Erfindung wird im Fall des Einsatzes mehrerer Blendkörper die von dem Leuchtmittel ausgesendete Lichtpulssequenz an die von den Leuchtmitteln der anderen Blendkörper ausgesendeten Lichtpulssequenzen angepasst.

Der elektronische Blendkörper zum Aussenden von Lichtpulsen zur Irritation von Personen und Sensorsystemen gemäß der Erfindung weist wenigstens einen optischen Emitter mit wenigstens einem elektronischen Leuchtmittel zum Aussenden von Lichtpulsen und eine Steuereinrichtung zum Ansteuern des Leuchtmittels des optischen Emitters auf, wobei die Steuereinrichtung derart ausgestaltet ist, dass sie das oben erläuterte Verfahren zum Betreiben des Blendkörpers gemäß der vorliegenden Erfindung ausführt.

Mit einem derart ausgestalteten Blendkörper können die gleichen Vorteile wie mit dem oben beschriebenen Verfahren der Erfindung erzielt werden.

Der elektronische Blendkörper weist wenigstens einen optischen Emitter, vorzugsweise mehrere optische Emitter auf. Die optischen Emitter enthalten jeweils ein elektronisches Leuchtmittel, bevorzugt LEDs oder Laserdioden bzw. LED-Arrays oder Laserarrays. Außerdem ist es vorteilhaft, wenn die Leuchtmittel LEDs oder Laserdioden in unterschiedlichen Emissionsfarben zur Bildung sogenannter RGB-Cluster enthalten.

Vorzugsweise weist der Blendkörper zusätzlich zu dem wenigstens einen optischen Emitter auch wenigstens einen akustischen Emitter zum Aussenden von Schallpulsen auf. Auf diese Weise kann die Irritationswirkung des Blendkörpers weiter erhöht werden. Die akustischen Emitter enthalten vorzugsweise elektronische Schallerzeuger wie zum Beispiel Piezoschallwandler.

In einer Ausgestaltung der Erfindung kann zudem eine Kommunikationseinrichtung vorgesehen sein, die mit der Steuereinrichtung verbunden ist, sodass die Steuereinrichtung des Blendkörpers mit Steuereinrichtungen anderer optischer und/oder akustischer Irritationskörper und/oder mit einer übergeordneten Steuerung kommunizieren kann, um das Ansteuern der Emitter der verschiedenen Irritationskörper aufeinander abzustimmen.

In einer Ausgestaltung der Erfindung weist der Blendkörper ferner einen integrierten Energiespeicher auf. Vorzugsweise ist der Energiespeicher ein wiederaufladbarer Energiespeicher. Das Aufladen des Energiespeichers kann berührungslos (z.B. induktiv) oder über einen Anschlussstecker erfolgen.

In einer Ausgestaltung der Erfindung weist der Blendkörper ferner eine Selbstzerstörungseinrichtung zur Selbstzerstörung des Blendkörpers, insbesondere dessen Steuereinrichtung auf. Durch eine Selbstzerstörung, die vorzugsweise per Fernsteuerung ausgelöst wird, kann verhindert werden, dass der Blendkörper von Dritten in Besitz genommen und gegen einen selbst verwendet wird.

Obige sowie weitere Merkmale und Vorteile der Erfindung werden aus der nachfolgenden Beschreibung bevorzugter, nicht-einschränkender Ausführungsbeispiele anhand der beiliegenden Zeichnung besser verständlich. Darin zeigen die beiden Figuren zusammen den Gegenstand der Erfindung, wobei sie größtenteils schematisch zeigen:
- Fig. 1: eine Prinzipdarstellung eines elektronischen Blendkörpers gemäß einem Ausführungsbeispiel der vorliegenden Erfindung; und
- Fig. 2: ein Leuchtdichte-Zeit-Diagramm einer Lichtpulssequenz gemäß einem Ausführungsbeispiel der vorliegenden Erfindung, die mit einem Blendkörper gemäß Fig. 1 erzeugt werden kann.

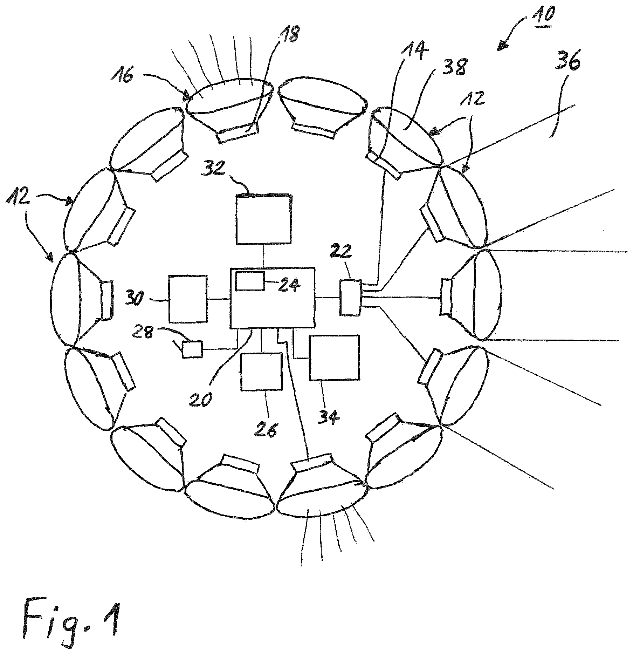

Der Blendkörper 10 von Fig. 1 hat ein im Wesentlichen zylindrisches oder kugelförmiges Gehäuse, an dessen Mantelfläche eine Anzahl optischer Emitter 12 angeordnet ist. Die optischen Emitter 12 enthalten jeweils ein elektronisches Leuchtmittel 14 zum Erzeugen von Lichtpulsen wie zum Beispiel LEDs, LED-Arrays, Laserdioden oder Laserarrays. Zur Verbesserung der Irritationswirkung ist der Blendkörper 10 bevorzugt auch mit wenigstens einem akustischen Emitter 16 ausgestattet. Die akustischen Emitter 16 enthalten jeweils einen elektronischen Schallerzeuger 18 zum Erzeugen von Schallpulsen wie zum Beispiel einen Piezoschallwandler.

Die elektronischen Leuchtmittel 14 der optischen Emitter 12 werden von einer Steuereinrichtung 20 über einen zwischengeschalteten Treiber 22 angesteuert. Die elektronischen Schallerzeuger 18 der akustischen Emitter 16 werden ebenfalls von der Steuereinrichtung 20 angesteuert. In Fig. 1 ist der besseren Übersichtlichkeit wegen nur ein Teil der leitungsgebundenen oder drahtlosen Verbindungen zwischen der Steuereinrichtung 20 und den Leuchtmitteln 14 bzw. Schallerzeugern 18 der Emitter 12, 16 eingezeichnet.

Die Steuereinrichtung 20 enthält vorzugsweise einen Timer 24. Der Blendkörper 10 ist auch mit einem Energiespeicher 26, vorzugsweise einem wiederaufladbaren Energiespeicher, zur Energieversorgung der elektronischen Komponenten des Blendkörpers 10 ausgestattet.

Die Steuereinrichtung 20 ist zudem mit einem Aktivierungsschalter 28 und/oder einem Entsicherungsmechanismus verbunden, der zum Beispiel vor einem Abwurf des Blendkörpers 10 betätigt werden kann. Ferner enthält der Blendkörper 10 einen (z.B. elektromagnetischen oder akustischen oder optischen) Abstandssensor 30 zum Erfassen eines Abstandes zwischen dem Blendkörper 10 und einem Objekt, insbesondere einer Zielperson. Im Ausführungsbeispiel von Fig. 1 enthält der Blendkörper 10 optional zudem eine Kommunikationseinrichtung 32, über welche die Steuereinrichtung 20 mit den Steuereinrichtungen anderer Blendkörper und/oder mit einer übergeordneten Steuerung kommunizieren kann.

Der Aktivierungsschalter 28, der Entsicherungsmechanismus, der Abstandssensor 30 und die Kommunikationseinrichtung 32 dienen als Aktivierungsmechanismus zum Aktivieren der Steuereinrichtung 20, damit diese direkt bei der Aktivierung oder - mit Hilfe des Timers 24 - eine vorbestimmte Zeit nach der Aktivierung die Leuchtmittel 14 der optischen Emitter 12 und die Schallerzeuger 18 der akustischen Emitter 16 zum Aussenden der Lichtpulse bzw. Schallpulse ansteuert. So können die Lichtpulse bzw. Schallpulse zum Beispiel eine vorbestimmte Zeitdauer nach einer Betätigung des Aktivierungsschalters 28 oder des Entsicherungsmechanismus, beim Unterschreiten eines vorbestimmten Grenzwerts durch den vom Abstandssensor 30 erfassten Objektabstand, eine vorbestimmte Zeitdauer nach einem Abwurf oder einem Aufschlag des Blendkörpers 10, etc. ausgesendet werden.

Die Kommunikationseinrichtung 32 kann zum Empfangen eines Aktivierungssignals von einer Fernsteuerung verwendet werden. Außerdem kann die Kommunikationseinrichtung 32 zur Kommunikation der Steuereinrichtung 16 mit Steuereinrichtungen anderer Blendkörper und/oder einer übergeordneten Steuerung dienen. Auf diese Weise können die Pulse der Emitter 12, 16 von verschiedenen Blendkörpern 10 aufeinander abgestimmt werden. Beispielsweise können die Lichtpulse oder Schallpulse synchron oder in einem wohldefinierten Muster ausgesendet werden.

Außerdem ist der Blendkörper 10 optional auch mit einer Selbstzerstörungseinrichtung 34 versehen. Sollte ein Blendkörper 10 in die Hände von Dritten gelangen und die Gefahr bestehen, dass diese den Blendkörper 10 gegen einen selbst verwenden, so kann die Selbstzerstörungseinrichtung 34 per Fernsteuerung über die Kommunikationseinrichtung 32 aktiviert werden, um den Blendkörper 10, insbesondere dessen Steuereinrichtung 20 zu zerstören.

Wie in Fig. 1 angedeutet, sind die optischen Emitter 12 des Blendkörpers 10 vorzugsweise so ausgestaltet, dass sie kollimierte Lichtstrahlen 36 aussenden. Die Kollimation der Lichtstrahlen 36 wird zum Beispiel mit Hilfe von optischen Elementen 38 wie Linsen oder Prismen erreicht.

Erfindungsgemäß ist die Steuereinrichtung 20 derart ausgestaltet, dass sie die Leuchtmittel 14 der optischen Emitter 12 derart ansteuert, dass die von den Leuchtmitteln 14 aus-gesendeten Lichtpulssequenzen an die Physiologie des menschlichen Auges, d.h. insbesondere an die besonderen Eigenschaften des menschlichen Sehprozesses angepasst sind. Zu diesen besonderen Eigenschaften zählen insbesondere Lidschlussreflex, Adaption, physiologische Blendwirkung, zeitlicher Verlauf der Sättigung der Zapfen bei photopischem Sehen, Botenstoffreduktion der Bipolarzellen, umgekehrte Proportionalität der Lichtquellengröße zur Blendwirkung, Unabhängigkeit der Blendwirkung von der Lichtfarbe, etc.

Beim normalen photopischen Sehen hängt die wahrgenommene Helligkeit des menschlichen Auges von der Anregung der unterschiedlich wellenlängenempfindlichen Zapfen im Auge ab. Dabei ist das Helligkeitsempfinden umso höher, je geringer die Reduktion der Botenstoffe an den Bipolarzellen ist. Durch die relative Trägheit der Botenstoffübermittlung werden auch gepulste Lichtstrahlen mit Pulsfrequenzen größer 50 Hz als konstante Helligkeit wahrgenommen. Die wahrgenommene Helligkeit ist dann proportional zu dem Flächeninhalt "Leuchtdichte über Zeit" und aufgrund der unterschiedlichen Empfindlichkeiten von L, M und S Zapfen auch von der Farbe der Lichtquelle abhängig.

Ab Leuchtdichten von 1×104 bis 1,6×106 cd/m² kann sich das Auge nicht mehr adaptieren, d.h. die Zapfen sind gesättigt (physiologische Blendung), sodass keine Botenstoffänderung mehr an den Bipolarzellen erzeugt wird. Dies gilt auch für Lichtquellen, die nicht das ganze Sichtfeld einnehmen. Es ist insbesondere zu beachten, dass die Blendwirkung umso stärker ist, je kleiner die Lichtquelle ist. Im Blendfall ist die Blendwirkung zudem nur schwach abhängig von der Lichtfarbe. Eine weitere relevante Augenfunktion ist der Lidschlussreflex, der in der Regel nach spätestens 250 ms abgeschlossen ist.

Da sich der größte Teil der Zapfen im Auge um die Hauptsehachse befindet, ist die Blendquelle umso effektiver, je näher sie an der Sehachse liegt. Da die sehr lichtempfindlichen Stäbchen besonders auf Reize aus dem periphären Sichtfeld reagieren und sich die Blickrichtung unbewusst auf diesen Reiz richtet, kann auch dieser Effekt ausgenutzt werden.

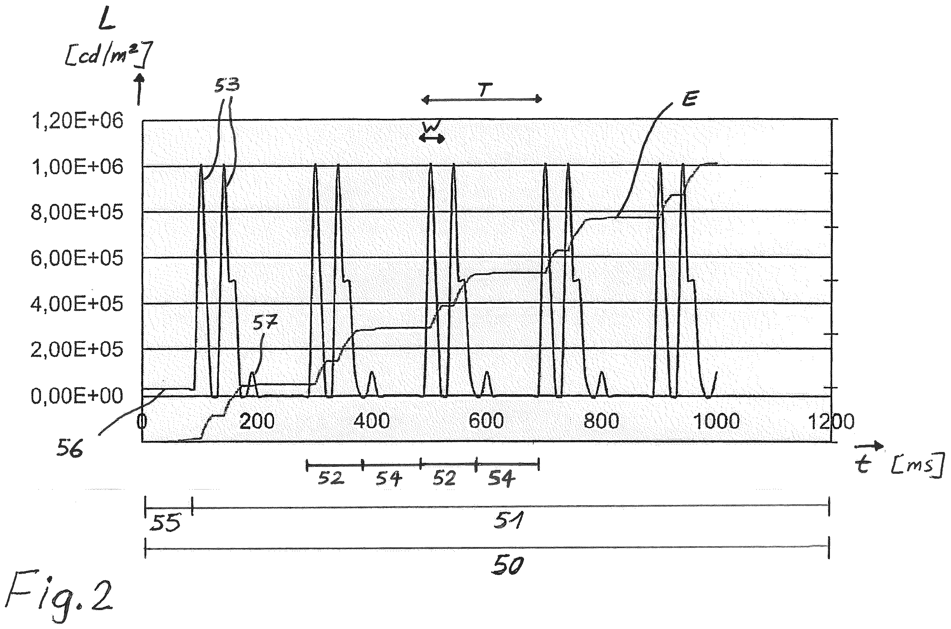

Fig. 2 zeigt in einem Leuchtdichte-Zeit-Diagramm eine effektive Lichtpulssequenz 50 des von einem Leuchtmittel 14 eines optischen Emitters 12 des Blendkörpers 10 ausgesendeten Lichts. Als Leuchtmittel kommen insbesondere LED-Arrays aus LEDs mit möglichst hoher photometrischer Effizienz in Frage, wobei die Lichtfarbe keine Rolle spielt. Die LEDs sollten möglichst eng zueinander angeordnet sein.

Die Lichtpulssequenz 50 enthält eine Irritationssequenz 51 und eine dieser vorgeschalteten Vorsequenz 55. In der Vorsequenz 55 wird ein von einer Zielperson wahrnehmbares Reizlicht 56 ausgesendet, das noch keine Irritationswirkung bei der Zielperson auslöst, aber die Aufmerksamkeit der Zielperson auf sich lenkt und damit die Blickrichtung der Zielperson in Richtung auf den Blendkörper 10 verändert. Das Reizlicht 56 kann als Dauerlicht oder Pulsfolge ausgeführt sein. Die Leuchtdichte L des Reizlichts 56 beträgt maximal 1×103 cd/m², im Ausführungsbeispiel von Fig. 2 beispielhaft zwischen etwa 200 und 500 cd/m². Die Zeitdauer dieser Vorsequenz 55 beträgt beispielsweise etwa 100 ms.

Die Irritationssequenz 51 enthält abwechselnd nacheinander mehrere Blendpulsfolgen 52 und mehrere Blendpausen 54. In den Blendpulsfolgen 52 werden zwei oder drei Blendpulse 53 ausgesendet, die eine Blendwirkung bei einer Zielperson bewirken sollen. Die Blendpulse 53 haben jeweils eine Leuchtdichte von etwa 1×106 cd/m², eine Pulsweite W im Bereich von 20 bis 50 ms und eine Pulssteigung im Bereich von 0,5×105 cd/m²□ms bis 2,0×105 cd/m²□ms.

In den Blendpausen 54 soll keine Blendung der Zielperson bewirkt werden. Die Blendpausen 54 können daher ohne Lichtemission ausgeführt sein. Im Ausführungsbeispiel von Fig. 2 werden in den Blendpausen 54 jeweils ein oder zwei Reizpulse 57 ausgesendet, die ähnlich dem Reizlicht 56 in der Vorsequenz 55 die Aufmerksamkeit der Zielperson (erneut) unbewusst auf den Blendkörper 10 lenken sollen. Die Reizpulse 53 haben jeweils eine Leuchtdichte von maximal etwa 1×104 cd/m² und eine Pulsweite W ebenfalls im Bereich von 20 bis 50 ms.

Die Periodendauer T einer Abfolge einer Blendpulsfolge 52 und einer anschließenden Blendpause 54 liegt innerhalb des Lidschlussreflexes und beträgt maximal etwa 250 ms. Im Ausführungsbeispiel von Fig. 2 beträgt die Periodendauer T etwa 200 ms. Die Dauer einer Blendpulsfolge 52 beträgt maximal etwa 200 ms, im Ausführungsbeispiel von Fig. 2 etwa 100 ms, und die Dauer einer Blendpause 54 beträgt mindestens etwa 50 ms, im Ausführungsbeispiel von Fig. 2 etwa 100 ms.

Im Diagramm von Fig. 2 ist zudem eine Kurve E eingezeichnet, die den kumulativen elektrischen Energieverbrauch des Leuchtmittels 14 veranschaulichen soll. Im Vergleich zu einer dauerhaften Folge von Blendpulsen ohne Blendpausen ist der elektrische Energieverbrauch E bei Anwendung der erfindungsgemäßen Lichtpulssequenz 50 deutlich reduziert. Die Energieeinsparung kann beispielsweise mehr als 50% betragen.

Zusätzlich zu den oben beschriebenen Aspekten der Pulsfolgen, Pulsformen und Leuchtdichten werden die Leuchtmittel 14 der optischen Emitter 12 von der Steuereinrichtung 20 auch so angesteuert, dass die Blendpulse 53 in der Irritationssequenz 51 eine Charakteristik haben, die eine möglichst starke Blendung bewirkt, ohne dauerhafte Schäden am Auge der Zielperson zu verursachen.

Zu diesem Zweck werden Blendpulse 53 generiert, die Pulsweiten W und Lichtstärken I haben, die in einem definierten Abstand □ vom Blendkörper 10 eine Bestrahlungsstärke erzeugen, die unterhalb einer maximal zulässigen Bestrahlung einer Zielperson liegt bzw. in einem festen Verhältnis von maximal 100% zu einem die maximal zulässige Bestrahlung angebenden Referenzwert stehen. Als Referenzwert für die maximal zulässige Bestrahlung kann beispielsweise ein MZB-Wert nach der Norm DIN EN 60825-1 verwendet werden.

Im Fall einer fest eingestellten Pulsweite und Wellenlänge der vom Leuchtmittel 14 ausgesendeten Lichtstrahlen kann die Steuereinrichtung 20 einen einmal berechneten Wert für die Lichtstärke I nutzen. Falls variable Pulsweiten W und/oder Wellenlängen der Blendpulse 53 erwünscht sind, muss die Steuereinrichtung 20 die Lichtstärke I für jeden Blendpuls 53 neu berechnen.

Der definierte Abstand □ ist beispielsweise ein zu erwartender minimaler Abstand D zwischen dem Blendkörper 10 und den Augen einer stehenden Zielperson (zum Beispiel etwa 2 m) oder eines für die Einsatzsituation des Blendkörpers 10 typischer Abstand. In diesem Fall kann die Steuereinrichtung 20 bei einer festgelegten Pulsweite und Wellenlänge der vom Leuchtmittel 14 ausgesendeten Lichtstrahlen einen voreingestellten Wert für die Lichtstärke I verwenden.

Alternativ wird der definierte Abstand □ dynamisch anhand von Abständen d zwischen dem Blendkörper 10 und Zielpersonen bestimmt, die mittels des Abstandssensors 30 des Blendkörpers 10 erfasst werden. Die Steuereinrichtung 20 bestimmt zum Beispiel aus dem vom Abstandssensor 30 erfassten Abstand d der Zielperson den MZB-Wert an der entsprechenden Augenposition und berechnet dann die Lichtstärke I und die Pulsdauer W für die Blendpulse 53 so, dass die erzeugte Bestrahlungsstärke in einem festen Verhältnis zu dem bestimmten MZB-Wert steht.

Befinden sich mehrere Personen im Wirkbereich des Blendkörpers 10 und erfasst der Abstandssensor 30 dementsprechend mehrere Abstände d, so erfolgt die Berechnung unter Berücksichtigung der sich dem Blendkörper 10 am nächsten befindenden Person, d.h. des kleinsten erfassten Abstandes d. Wahlweise kann auch eine Mittelung der erfassten Abstände d, optional mit einer speziellen Wichtung zum Beispiel der näheren Abstände, erfolgen.

Werden mehrere Blendkörper 10 eingesetzt, so kann die Bestimmung des definierten Abstandes □ und des entsprechenden Referenzwerts entweder für jeden Blendkörper 10 individuell oder unter Einbeziehung der anderen Blendkörper 10 und der von diesen erfassten Abstände erfolgen.

Außerdem kann auch die Umgebungshelligkeit in die Berechnung der Lichtstärken I und Pulsweiten W der Blendpulse 53 mit einbezogen werden. Zu diesem Zweck kann der Blendkörper 10 zum Beispiel mit einem Photosensor ausgestattet sein oder über die Kommunikationseinrichtung 32 entsprechende Informationen empfangen.

### BEZUGSZIFFERNLISTE

- 10: elektronischer Blendkörper
- 12: optischer Emitter
- 14: Leuchtmittel
- 16: akustischer Emitter
- 18: Schallerzeuger
- 20: Steuereinrichtung
- 22: Treiber
- 24: Timer
- 26: Energiespeicher
- 28: Aktivierungsschalter
- 30: Abstandssensor
- 32: Kommunikationseinrichtung
- 34: Selbstzerstörungseinrichtung
- 36: kollimierter Lichtstrahl
- 38: optisches Element, insbes. Linse oder Prisma
- 50: Lichtpulssequenz
- 51: Irritationssequenz
- 52: Blendpulsfolge
- 53: Blendpulse
- 54: Blendpause
- 55: Vorsequenz
- 56: Reizlicht
- 57: Reizpulse

- d: Abstand
- D: vorgegebener Minimalabstand
- □: definierter Abstand
- E: elektrische Energie
- I: Lichtstärke
- L: Leuchtdichte
- T: Periodendauer
- W: Pulsweite

## Patentansprüche

1. Verfahren zum Betreiben eines elektronischen Blendkörpers (10), der wenigstens einen optischen Emitter (12) mit wenigstens einem elektronischen Leuchtmittel (14) zum Aussenden von Lichtpulsen aufweist,
wobei das Leuchtmittel (14) des optischen Emitters (12) zum Anpassen einer von dem Leuchtmittel (14) ausgesendeten Lichtpulssequenz (50) an die Physiologie des menschlichen Auges und damit an die Eigenschaften des menschlichen Sehprozesses derart angesteuert wird, dass die Lichtpulssequenz (50) eine Irritationssequenz (51) enthält, in der abwechselnd nacheinander mehrere Blendpulsfolgen (52) mit mehreren Blendpulsen (53) zum Erzielen einer Irritationswirkung bei einer Zielperson und mehrere Blendpausen (54) ohne Blendpulse (53) ausgesendet werden,
**dadurch gekennzeichnet, dass**
eine Periodendauer (T) einer Abfolge aus einer Blendpulsfolge (52) und einer anschließenden Blendpause (54) maximal 250 ms beträgt; und
Lichtpulssequenz (50) ferner eine der Irritationssequenz (51) vorgeschaltete Vorsequenz (55) enthält, in der ein von einer Zielperson wahrnehmbares Reizlicht (56) mit einer Leuchtdichte (L) von maximal 1×10³ cd/m² ausgesendet wird, das die Aufmerksamkeit der Zielperson ohne Irritationswirkung bei der Zielperson auf sich lenkt.

2. Verfahren nach Anspruch 1, bei welchem die Blendpulse (53) jeweils eine Leuchtdichte (L) von maximal 1,6×10⁶ cd/m² haben.

3. Verfahren nach einem der vorhergehenden Ansprüche, bei welchem die Blendpulse (53) jeweils eine Pulssteigung im Bereich von 0,5×10⁵ cd/m²·ms bis 2,0×10⁵ cd/m²·ms haben.

4. Verfahren nach einem der vorhergehenden Ansprüche, bei welchem die Blendpulse (53) jeweils eine Pulsweite (W) im Bereich von 20 ms bis 50 ms haben.

5. Verfahren nach einem der vorhergehenden Ansprüche, bei welchem
in den Blendpausen (54) der Irritationssequenz (51) jeweils wenigstens ein Reizpuls (57) mit einer Leuchtdichte (L) von maximal 1×10⁴ cd/m² ausgesendet wird, der die Aufmerksamkeit der Zielperson ohne Irritationswirkung bei der Zielperson auf den Blendkörper (10) lenkt.

6. Verfahren nach einem der vorhergehenden Ansprüche, bei welchem die Blendpulse (53) derartige Pulsweiten (W) und Lichtstärken (I) haben, dass sie in einem definierten Abstand (δ) vom Blendkörper (10) eine Bestrahlungsstärke unterhalb einer maximal zulässigen Bestrahlung einer Zielperson erzeugen.

7. Verfahren nach Anspruch 6, bei welchem
Abstände (d) zwischen dem Blendkörper (10) und wenigstens einer Zielperson erfasst werden und der definierte Abstand (δ) in Abhängigkeit von den erfassten Abständen (d) bestimmt wird.

8. Verfahren nach Anspruch 7, bei welchem
im Fall des Einsatzes mehrerer Blendkörper (10) die von dem Leuchtmittel (14) ausgesendete Lichtpulssequenz (50) an die von den anderen Blendkörpern erfassten Abstände zu Zielpersonen angepasst wird.

9. Verfahren nach Anspruch 6, bei welchem
der definierte Abstand (δ) ein zu erwartender minimaler Abstand (D) zwischen dem Blendkörper (10) und den Augen einer Zielperson ist.

10. Verfahren nach einem der vorhergehenden Ansprüche, bei welchem
die Lichtpulse des optischen Emitters (12) als kollimierte Lichtstrahlen (36) ausgesendet werden.

11. Verfahren nach einem der vorhergehenden Ansprüche, bei welchem
im Fall des Einsatzes mehrerer Blendkörper (10) die von dem Leuchtmittel (14) ausgesendete Lichtpulssequenz (50) an die von den Leuchtmitteln der anderen Blendkörper ausgesendeten Lichtpulssequenzen angepasst wird.

12. Elektronischer Blendkörper (10), aufweisend:
wenigstens einen optischen Emitter (12) mit wenigstens einem elektronischen Leuchtmittel (14) zum Aussenden von Lichtpulsen; und
eine Steuereinrichtung (20) zum Ansteuern des Leuchtmittels (14) des optischen Emitters (12),
**dadurch gekennzeichnet, dass**
die Steuereinrichtung (20) derart ausgestaltet ist, dass sie ein Verfahren zum Betreiben des Blendkörpers (10) nach einem der Ansprüche 1 bis 11 ausführt.

13. Elektronischer Blendkörper (10) nach Anspruch 12, welcher zusätzlich zu dem wenigstens einen optischen Emitter (12) wenigstens einen akustischen Emitter (16) zum Aussenden von Schallpulsen aufweist.

14. Elektronischer Blendkörper (10) nach Anspruch 12 oder 13, ferner aufweisend eine Kommunikationseinrichtung (32), die mit der Steuereinrichtung (20) verbunden ist, sodass die Steuereinrichtung (2) des Blendkörpers (10) mit Steuereinrichtungen anderer optischer und/oder akustischer Irritationskörper und/oder mit einer übergeordneten Steuerung kommunizieren kann, um das Ansteuern der Emitter der verschiedenen Irritationskörper aufeinander abzustimmen.

## Claims

1. Method for operating an electronic dazzling element (10)
having at least one optical emitter (12) with at least one electronic light-emitting means (14) for emitting light pulses,
wherein the light-emitting means (14) of the optical emitter (12) is controlled for adapting a light pulse sequence (50) emitted by the light-emitting means (14) to the physiology of the human eye and thus to the properties of the human visual process in such a way that the light pulse sequence (50) contains a disorientation sequence (51) in which alternately, one after the other, a plurality of dazzle pulse sequences (52) with a plurality of dazzle pulses (53) are emitted to bring about a disorienting effect on a target person and a plurality of dazzle pauses (54) without dazzle pulses (53),
**characterized in that**
a period duration (T) of one sequence comprising a dazzle pulse sequence (52) and a subsequent dazzle pause (54) is at most 250 ms; and
the light pulse sequence (50) furthermore contains a pre-sequence (55) preceding the disorientation sequence (51) in which stimulus light (56), which is perceptible by a target person, is emitted with a luminance (L) of at most 1×10³ cd/m², which draws the target person's attention without any disorienting effect on the target person.

2. Method according to Claim 1, in which
the dazzle pulses (53) each have a luminance (L) of at most 1.6×10⁶ cd/m².

3. Method according to either of the preceding claims, in which
the dazzle pulses (53) each have a pulse slope in the range of 0.5×10⁵ cd/m²·ms to 2.0×10⁵ cd/m²·ms.

4. Method according to any of the preceding claims, in which
the dazzle pulses (53) each have a pulse width (W) in the range of 20 ms to 50 ms.

5. Method according to any of the preceding claims, in which
at least one stimulus pulse (57) with a luminance (L) of at most 1×10⁴ cd/m² is emitted in each of the dazzle pauses (54) of the disorientation sequence (51), and draws the target person's attention to the dazzling element (10) without any disorienting effect on the target person.

6. Method according to any of the preceding claims, in which
the dazzle pulses (53) have such pulse widths (W) and light intensities (I) that they generate, at a defined distance (δ) from the dazzling element (10), an irradiance below a maximum permissible exposure of a target person.

7. Method according to Claim 6, in which
distances (d) between the dazzling element (10) and at least one target person are captured and the defined distance (δ) is determined as a function of the captured distances (d).

8. Method according to Claim 7, in which
in the case when a plurality of dazzling elements (10) are used, the light pulse sequence (50) emitted by the light-emitting means (14) is adapted to the distances from target persons captured by the other dazzling elements.

9. Method according to Claim 6, in which
the defined distance (δ) is an expected minimum distance (D) between the dazzling element (10) and the eyes of a target person.

10. Method according to any of the preceding claims, in which
the light pulses of the optical emitter (12) are emitted as collimated light beams (36).

11. Method according to any of the preceding claims, in which
in the case when a plurality of dazzling elements (10) are used, the light pulse sequence (50) emitted by the light-emitting means (14) is adapted to the light pulse sequences emitted by the light-emitting means of the other dazzling elements.

12. Electronic dazzling element (10),
having:
at least one optical emitter (12) with at least one electronic light-emitting means (14) for emitting light pulses; and
a control device (20) for controlling the light-emitting means (14) of the optical emitter (12),
**characterized in that**
the control device (20) is designed in such a way that it carries out a method for operating the dazzling element (10) according to any of Claims 1 to 11.

13. Electronic dazzling element (10) according to Claim 12, which has at least one acoustic emitter (16) for emitting sound pulses in addition to the at least one optical emitter (12).

14. Electronic dazzling element (10) according to Claim 12 or 13, furthermore having a communication device (32) connected to the control device (20) to the effect that the control device (2) of the dazzling element (10) can communicate with control devices of other optical and/or acoustic disorientation elements and/or with a higher-level controller in order to coordinate the controlling of the emitters of the various disorientation elements with respect to one another.

## Revendications

1. Procédé pour faire fonctionner un corps d'éblouissement (10) électronique,
qui comporte au moins un émetteur (12) optique doté d'au moins un moyen d'éclairage (14) électronique destiné à émettre des impulsions lumineuses,
le moyen d'éclairage (14) de l'émetteur optique (12) étant activé pour adapter une séquence d'impulsions lumineuses (50) émise par le moyen d'éclairage (14) à la physiologie de l'œil humain et par conséquent aux propriétés du processus de vision humain de sorte que la séquence d'impulsions lumineuses (50) contient une séquence d'irritation (51) dans laquelle sont émises alternativement et successivement plusieurs suites d'impulsions d'éblouissement (52) comprenant plusieurs impulsions d'éblouissement (53) pour obtenir un effet d'irritation chez une personne cible, et plusieurs pauses d'éblouissement (54) sans impulsions d'éblouissement (53),
**caractérisé**
**en ce qu'**une durée (T) d'une période d'une série composée d'une séquence d'impulsions d'éblouissement (52) et d'une pause d'éblouissement (54) consécutive est au maximum de 250 ms ; et
la séquence d'impulsions lumineuses (50) contient en outre une séquence préliminaire (55) précédant la séquence d'irritation (51), dans laquelle une lumière de stimulation (56) perceptible par une personne cible est émise avec une luminance (L) maximale de 1×10³ cd/m², qui attire l'attention de la personne cible sans effet d'irritation chez la personne cible.

2. Procédé selon la revendication 1, dans lequel
les impulsions d'éblouissement (53) ont respectivement une luminance (L) maximale de 1,6×10⁶ cd/m².

3. Procédé selon l'une quelconque des revendications précédentes, dans lequel
les impulsions d'éblouissement (53) présentent respectivement un front d'impulsion compris entre 0,5×10⁵ cd/m²·ms et 2,0×10⁵ cd/m²·ms.

4. Procédé selon l'une quelconque des revendications précédentes, dans lequel
les impulsions d'éblouissement (53) ont respectivement une largeur d'impulsion (W) allant de 20 ms à 50 ms.

5. Procédé selon l'une quelconque des revendications précédentes, dans lequel,
pendant les pauses d'éblouissement (54) de la séquence d'irritation (51), au moins une impulsion de stimulation (57) est respectivement émise avec une luminance (L) maximale de 1×10⁴ cd/m², qui attire l'attention de la personne cible vers le corps d'éblouissement (10) sans effet d'irritation chez la personne cible.

6. Procédé selon l'une quelconque des revendications précédentes, dans lequel
les impulsions d'éblouissement (53) ont des largeurs d'impulsion (W) et des intensités lumineuses (I) telles qu'elles génèrent, à une distance définie (δ) du corps d'éblouissement (10), une intensité de rayonnement inférieure à un rayonnement maximal admissible pour une personne cible.

7. Procédé selon la revendication 6, dans lequel
des distances (d) entre le corps d'éblouissement (10) et au moins une personne cible sont détectées et la distance définie (δ) est déterminée en fonction des distances (d) détectées.

8. Procédé selon la revendication 7, dans lequel,
dans le cas de l'utilisation de plusieurs corps d'éblouissement (10), la séquence d'impulsions lumineuses (50) émise par le moyen d'éclairage (14) est adaptée aux distances détectées entre les autres corps d'éblouissement et les cibles.

9. Procédé selon la revendication 6, dans lequel
la distance définie (δ) est une distance minimale attendue (D) entre le corps d'éblouissement (10) et les yeux d'une personne cible.

10. Procédé selon l'une quelconque des revendications précédentes, dans lequel
les impulsions lumineuses de l'émetteur optique (12) sont émises sous la forme de faisceaux lumineux collimatés (36).

11. Procédé selon l'une quelconque des revendications précédentes, dans lequel,
dans le cas de l'utilisation de plusieurs corps d'éblouissement (10), la séquence d'impulsions lumineuses (50) émise par le moyen d'éclairage (14) est adaptée aux séquences d'impulsions lumineuses émises par les moyens d'éclairage des autres corps d'éblouissement.

12. Corps d'éblouissement (10) électronique, comportant :
au moins un émetteur (12) optique doté d'au moins un moyen d'éclairage (14) électronique destiné à émettre des impulsions lumineuses ; et
un dispositif de commande (20) destiné à commander le moyen d'éclairage (14) de l'émetteur optique (12),
**caractérisé en ce que**
le dispositif de commande (20) est conçu de manière à mettre en œuvre un procédé pour faire fonctionner le corps d'éblouissement (10) selon l'une quelconque des revendications 1 à 11.

13. Corps d'éblouissement (10) électronique selon la revendication 12, qui comporte, en plus dudit au moins un émetteur optique (12), au moins un émetteur acoustique (16) destiné à émettre des impulsions sonores.

14. Corps d'éblouissement (10) électronique selon la revendication 12 ou 13, comportant en outre un dispositif de communication (32) qui est relié au dispositif de commande (20), de sorte que le dispositif de commande (2) du corps d'éblouissement (10) peut communiquer avec des dispositifs de commande d'autres corps d'irritation optiques et/ou acoustiques et/ou avec une unité de commande de niveau supérieur, afin d'harmoniser l'activation des émetteurs des différents corps d'irritation les uns par rapport aux autres.
